# EUROPÄISCHE PATENTSCHRIFT

(11) **EP 1 405 693 B1**
(45) Veröffentlichungstag und Bekanntmachung des Hinweises auf die Patenterteilung: **26.04.2017**
(21) Anmeldenummer: 03022095.8
(22) Anmeldetag: 02.10.2003
(51) Int. Cl.: B23Q 7/14, B27M 1/08, B27B 31/00, B23Q 7/04, B27C 5/06

(54) **Bearbeitungsanlage für das Bearbeiten von Holzwerkstücken**
machining apparatus for working wooden workpieces
dispositif d'usinage pour des pièces en bois

(30) Priorität: 02.10.2002 DE 10246288; 10.02.2003 DE 10305570
(43) Veröffentlichungstag der Anmeldung: 07.04.2004
(73) Patentinhaber: Hundegger, Hans, 87749 Hawangen (DE)
(72) Erfinder: Hundegger, Hans, 87749 Hawangen (DE)
(74) Vertreter: Schwarz, Thomas

(56) Entgegenhaltungen:
- EP-A2- 0 960 705
- CH-A- 515 485
- DE-A1- 3 900 304
- DE-A1- 3 900 304
- DE-A1- 4 301 216
- DE-A1- 4 301 217
- FR-A- 2 541 171
- GB-A- 2 328 398

## Beschreibung

Die Erfindung betrifft eine Bearbeitungsanlage für das Bearbeiten von Holzwerkstücken, Kanthölzern, Brettern und dergleichen, gemäß dem Oberbegriff des Anspruchs 1.

Aus der europäischen Patentschrift 561 227 ist eine Abbundmaschine zum Bearbeiten von Kanthölzern oder dergleichen bekannt. Hierbei werden mehrere Bearbeitungsaggregate hintereinander vorgeschlagen. Ein erstes Transportsystem sorgt für das Herantransportieren eines Holzwerkstückes an das erste Bearbeitungsaggregat, zum Beispiel eine Kapp- oder Quersäge. Nachdem dieses erste Bearbeitungsaggregat das vordere Ende des Holzwerkstückes bearbeitet, zum Beispiel abgekappt hat, wird das Holzwerkstück von einem zweiten Transportsystem übernommen und den weiteren Bearbeitungsaggregaten, die unterschiedlichste Bearbeitungen auszuführen vermögen, zugeführt. Das erste Bearbeitungsaggregat wird dadurch wieder frei, um ein nachfolgendes Holzwerkstück zu bearbeiten.

Die verschiedenen Bearbeitungsschritte, also Sägen, Bohren, Fräsen und so weiter, werden hierbei in jeweils einzelnen Bearbeitungsaggregaten vorgesehen. Dies führt dazu, dass zwischen den verschiedenen Bearbeitungsaggregaten ein entsprechender Transportweg besteht und die Abbundanlage nach dem Stand der Technik eine entsprechende Länge aufweist.

Aus DE 43 01 216 ist eine Bearbeitungsanlage zum Bearbeiten von Holzwerkstücken nach dem Oberbegriff des Anspruchs 1 bekannt. Weitere gattungsgemäße Bearbeitungsaggregate sind in DE 43 01 217, GB 2 328 398, DE 39 00 304 und EP 0 960 705 gezeigt.

Die vorliegende Erfindung hat es sich zur Aufgabe gemacht, den Stand der Technik dahingehend zu verbessern, dass bei gleichen Bearbeitungsmöglichkeiten weniger Stellplatz benötigt wird.

Gelöst wird die Aufgabe durch die nachfolgend dargestellte, erfindungsgemäße Vorrichtung. Die Erfindung schlägt eine Vorrichtung zum Bearbeiten von Holzwerkstücken vor, wobei mindestens ein Bearbeitungsaggregat vorgesehen ist, in dessen Zulauf- und Ablaufbereich je ein Transportsystem für das Holzwerkstück vorgesehen ist und das Bearbeitungsaggregat gegebenenfalls neben einer Bearbeitung des vorderen Endbereiches des Holzwerkstückes, auch weitere Bearbeitungen an dem Holzwerkstück ausführt. Die erfindungsgemäße Leistung liegt insbesondere darin, dass das Bearbeitungsaggregat nicht nur für einen Bearbeitungsschritt verwendet wird, sondern das Bearbeitungsaggregat für eine Vielzahl von Bearbeitungsschritten eingesetzt wird.

In der einfachsten Ausgestaltung der Erfindung ist vorgesehen, dass als Bearbeitungsaggregat zum Beispiel nur eine Säge eingesetzt wird. Die Säge oder auch ein anderes, beliebiges Werkzeug vermag nicht nur das in Transportrichtung liegende, vordere Ende des Werkstückes zu bearbeiten, sondern wird auch für jede weitere Bearbeitung entlang des Holzwerkstückes eingesetzt. Die Anordnung der beiden Transportvorrichtungen erlaubt sowohl eine sichere, also positionsgenaue Bearbeitung wie auch eine sehr schnelle Bearbeitung. Wird nämlich ein fertig bearbeitetes Werkstück von dem zweiten Transportsystem austransportiert, so kann bereits das nächst nachfolgende eintransportiert werden. Dabei erlaubt die Erfindung in ihrer einfachsten Variante eine Ausgestaltung als Bearbeitungsanlage oder als Sägeanlage mit einer entsprechend komfortabel und auch intelligent steuerbaren Säge. An Stelle von einer Säge in dieser Bearbeitungsanlage, kann natürlich jedes andere, gewünschte Werkzeug eingesetzt werden. Das Bearbeitungsaggregat ist dabei aber problemlos entsprechend aufrüstbar und somit sind auch die Möglichkeiten der Bearbeitung in einer erfindungsgemäßen Bearbeitungsanlage entsprechend zu erhöhen. Die Erfindung erlaubt auch, dass mit einer solchen, entsprechend ausgestatteten Bearbeitungsanlage auch aufwendige Abbundarbeiten, wie sie auf Abbundanlagen nach dem Stand der Technik ausgeführt werden, möglich sind.

Mit der Erfindung wird nicht nur die Bearbeitung beschleunigt (es wird bereits ein nachfolgendes Holzwerkstück eingefördert, während das fertig bearbeitete Werkstück gerade austransportiert wird), sondern die erfindungsgemäße Bearbeitungsanlage baut auch kürzer wie vergleichbare andere Anlagen. Besonders dann, wenn eine Vielzahl von Bearbeitungswerkzeugen in dem Bearbeitungsaggregat auf engen Raum kombiniert werden, so wird auch eine entsprechende Baulänge einer solchen Bearbeitungsanlage eingespart.

Die Erfindung schlägt vor, dass das Holzwerkstück, nachdem gegebenenfalls dessen vorderer Endbereich (im Bezug auf die Richtung von Zulauf nach Ablauf) bearbeitet ist, von dem gleichen Bearbeitungsaggregat an weiteren Positionen entlang des Holzwerkstückes bearbeitet wird. Dabei legt sich die Erfindung nicht fest, welcher erste Bearbeitungsschritt ausgeführt werden soll. Es ist zum Beispiel möglich, als Werkzeug in dem Bearbeitungsaggregat eine Säge vorzusehen, die nach dem Anschnitt entsprechende weitere Unterteilungen maßgenau durchführt. Für eine maßgenaue Anordnung der jeweiligen Bearbeitungen sorgt das Positioniersystem des Transportsystemes.

In einer Variante der Erfindung kann anstelle eines Sägeblattes natürlich auch ein spanabhebendes Werkzeug, zum Beispiel ein Hobelwerkzeug, ein Bohrer oder ein Fräser vorgesehen werden, der ebenfalls an beliebigen Stellen entlang des Holzwerkstückes eingesetzt wird.

Eine solche Bearbeitungsanlage dient zum Bearbeiten von Holzwerkstücken, Kanthölzern, Brettern und dergleichen, wobei in einem Zulaufbereich ein erstes Transportsystem für das Holzwerkstück vorgesehen ist, welches eingeförderte Holzwerkstücke an ein Bearbeitungsaggregat herantransportiert und wobei auf der Ablaufseite des Bearbeitungsaggregates ein zweites Transportsystem vorgesehen ist und das Bearbeitungsaggregat gegebenenfalls den vorderen Endbereich des Holzwerkstückes. bearbeitet. Die Erfindung umfasst, dass das erste und/oder das zweite Transportsystem das Holzwerkstück für weitere Bearbeitungen des Bearbeitungsaggregates transportiert. Es ist erfindungsgemäß geplant, dass eine Überlagerung der Bearbeitung und der Transportbewegung erfolgt. Dadurch ist es prinzipiell möglich, Bahnen zu fahren beziehungsweise die Bewegungsachse des Werkstückes bei der Bearbeitung mit einzusetzen. Dies wird durch eine weitere, bewegte Achse bei den Werkstücken noch komfortabler und vielfältiger.

Die erfindungsgemäße Bearbeitungsanlage erlaubt mehrere Varianten, wie das Holzwerkstück in dem Bearbeitungsaggregat für eine weitere Bearbeitung zu positionieren ist. Hierzu wird entweder das erste Transportsystem, welches auf der Zulaufseite angeordnet ist, eingesetzt. Alternativ ist es möglich, das auf der Ablaufseite befindliche zweite Transportsystem zu verwenden. Auch ein gemeinsamer Einsatz beider Transportsysteme, zum Beispiel für eine gemeinsame Führung des Holzwerkstückes (zum Beispiel an den jeweiligen Enden), ist von Vorteil.

Im Sinne der Erfindung kommt es dabei nicht zwingend darauf an, dass in jedem Fall immer eine Bearbeitung des vorderen Endbereiches des Holzwerkstückes zu erfolgen hat. Diese ist zwar vorteilhaft aber nicht wesentlich, da die Erfindung flexibel ist und natürlich auch nur eine Bearbeitung des Holzwerkstückes zum Beispiel im Mittelbereich durchführt. Da die Erfindung aber grundsätzlich ausreichend flexibel ist, um auch eine klassische Kappfunktion durchzuführen, erschließt sich ein großer Einsatzbereich der Erfindung.

Soweit im Zusammenhang mit dieser Erfindung nur von einem Holzwerkstück allgemein gesprochen wird, sollen damit natürlich auch Kanthölzer, Bretter oder andere Holzwerkstücke umfasst sein. Die Erfindung ist auch in der Lage zum Beispiel einen Stapel von Holzbrettern simultan, also gleichzeitig, zu bearbeiten. Die eingesetzten Transportsysteme, hierauf wird noch eingegangen, sind in der Lage solche, ansonsten nicht miteinander verbundene Holzwerkstücke, sicher und maßhaltig zu transportieren. Somit sollen unter Holzwerkstücke nicht nur einzelne Teile sondern auch Stapel von Holzwerkstücken verstanden sein.

Die Erfindung stellt insbesondere darauf ab, dass in der Bearbeitungsanlage nur ein Bearbeitungsaggregat vorgesehen ist. Das bedeutet allerdings nicht, dass die Erfindung nicht auch an Bearbeitungsanlagen mit mehreren Bearbeitungsaggregaten realisiert wird. Bei einem solchen Anwendungsfall ist zu beachten, dass insbesondere auch das erste Bearbeitungsaggregat nicht nur eine Bearbeitung des vorderen Endbereiches des Holzwerkstückes leistet, sondern auch weitere Bearbeitungen leisten kann. Insofern wird die erfindungsgemäße Leistung bei dem ersten Bearbeitungsaggregat genützt und so der erfindungsgemäße Vorteil erreicht.

Der besondere Vorteil der Erfindung tritt natürlich dann hervor, wenn nur ein Bearbeitungsaggregat eingesetzt wird, welches, was ebenfalls Teil der Erfindung ist, dann gegebenenfalls auch komplex ausgestaltet ist, um eine Vielzahl unterschiedlicher Bearbeitungen zu erlauben.

In einer bevorzugten Ausgestaltung der Erfindung ist vorgesehen, dass das Positioniersystem beziehungsweise ein damit verbundenes Meßsystem während der ersten Bearbeitung des Holzwerkstückes durch das Bearbeitungsaggregat zum Beispiel dem Kappen auf die jeweilige Lage des Transportsystemes zum Holzwerkstück normiert wird. Durch diese erfindungsgemäße Weiterentwicklung kommt es auf die genaue Lage des Transportsystemes, also dessen Angriffspunkt am Holzwerkstück nicht an. Die Bearbeitungsanlage beziehungsweise das Meßsystem des Positioniersystemes des Transportsystemes kennt die jeweilige Lage des Transportsystemes zu dem Ort der ersten Bearbeitung, wodurch eine maßgenaue weitere Positionierung des Holzwerkstückes problemlos möglich ist. Dabei wirkt die Normierung als Initialisierung des Meßsystemes, um sicherzustellen, dass eine entsprechend genaue Bearbeitung erfolgt. Diese Indexierung oder Initialisierung setzt dabei nicht den Einsatz eines Kapschnittes am vorderen Ende des Holzwerkstückes voraus. Diese Initialisierung erfolgt zum Beispiel optisch (Lichtschranke, Lichtvorhang), mechanisch oder elektrisch (beziehungsweise kapazitiv) in gleicher Weise und setzt so das Meßsystem auf Null für die Normierung. Die Indexierung beziehungsweise Initialisierung setzt dabei natürlich voraus, dass das Holzwerkstück zunächst erkannt beziehungsweise erfasst wird. Gegebenenfalls werden gleichzeitig nicht nur die Positioniersysteme beider Transportsysteme normiert, sondern diese auch aufeinander synchronisiert.

Alternativ wird vorgeschlagen, dass das Transportsystem das Holzwerkstück vor einer Bearbeitung gegen einen Anschlag fördert und so die jeweilige Lage des Transportsystemes zum Holzwerkstück normiert wird. In diesem Fall kennt die Steuerung, auf welche das erfindungsgemäße Verfahren Anwendung findet, beziehungsweise die Bearbeitungsanlage selber, die Lage des Anschlages im Bezug auf die Lage des Bearbeitungspunktes und führt so eine Normierung beziehungsweise Initialisierung durch. Auch diese Vorgehensweise führt zu einer maßgenauen und auch maßhaltigen Bearbeitung.

Es ist günstig, wenn zunächst das erste Transportsystem das Holzwerkstück zur Bearbeitung zum Bearbeitungsaggregat beziehungsweise zum Anschlag transportiert und dort die Initialisierung beziehungsweise die Normierung beginnt. Da die Bearbeitungsanlagen so ausgestaltet sind, dass beide Transportsysteme untereinander entsprechend normiert sind, insbesondere wenn eine Übergabe des Holzwerkstückes von dem ersten zum zweiten Transportsystem erfolgt, ist es vorteilhaft, wenn eine entsprechende Initialisierung auch für das Transportsystem, welches nicht unmittelbar bei dem Heranfördern des Holzwerkstückes beteiligt ist, durchgeführt wird.

Die Erfindung sieht vor, dass das Holzwerkstück auch während seiner Bearbeitung bewegt wird. Dadurch ist es prinzipiell möglich, auch Bearbeitungsbahnen zu fahren, das heißt, komplexere Bearbeitungen zum Beispiel entlang der Längserstreckung des Holzwerkstückes in dieses einzuarbeiten. Eine solche Verfahrensweise ist bei dem Kappsägen nach dem Stand der Technik unbekannt.

Das Bahnfahren erfolgt dabei zum Beispiel dadurch, dass das Holzwerkstück nur durch das erste oder das zweite oder durch beide Transportsysteme gemeinsam bewegt wird.

Erfindungsgemäß weist zumindest ein Transportsystem ein mit einem Meßsystem zusammenwirkendes Positioniersystem auf, wodurch eine maßgenaue Positionierung des Holzwerkstückes in dem Bearbeitungsaggregat möglich ist. In der einfachsten Ausgestaltung wird dabei vorgeschlagen, dass zumindest das zweite Transportsystem ein entsprechendes Positioniersystem aufweist und so die Positionierung des Holzwerkstückes in dem Bearbeitungsaggregat übernimmt. In einer solchen einfachen Ausgestaltung kann auf ein entsprechendes Positioniersystem in dem ersten Transportsystem, welches im Zuführbereich die Anförderung des Holzwerkstückes übernimmt, verzichtet werden. Günstiger ist aber, dass beide Transportsysteme ein entsprechendes Positioniersystem aufweisen, um dadurch eine entsprechend flexible Bearbeitung zu erlauben.

Es ist von Vorteil, wenn das Transportsystem eine kraft- und/oder formschlüssig wirkende Kopplungseinheit aufweist, das heißt, dass das Transportsystem mit dem Holzwerkstück für Transport- beziehungsweise Positionierzwecke verbunden ist. Es ist günstig, wenn eine ausreichend sichere Bindung der Kopplungseinheit mit dem Holzwerkstück besteht, um einen Versatz der Lage des Holzwerkstückes zur Kopplungseinheit sicher zu vermeiden. Ein solcher Versatz, zum Beispiel ein Schlupf, würde die Maßhaltigkeit entsprechend beeinträchtigen. Eine ausreichende Maßsicherheit wird dabei durch entsprechend kraft und/oder formschlüssig wirkende Kopplungseinheiten sichergestellt, wobei auch nur kraft- oder nur formschlüssig wirkende Kopplungseinheiten ausreichend sind. Natürlich ist es möglich, auch eine formschlüssige Verbindung mit Kraftschluss kombiniert einzusetzen.

Als Kopplungseinheit wird oftmals ein auf einer Führungsbahn verfahrbarer Positionswagen eingesetzt, wobei der Positionswagen entsprechende Elemente zum Verbinden mit dem Holzwerkstück aufweist.

Erfindungsgemäß ist vorgesehen, dass das erste Transportsystem von mindestens einer (oder auch mehreren) angetriebenen Antriebsrolle, -rad oder -walze gebildet ist, welche das auf einem Maschinentisch oder einer Rollenbahn aufliegende Holzwerkstück transportiert. Gerade für die Einförderbewegung des Werkstückes ist eine solche Anordnung von Vorteil.

In einer bevorzugten Variante ist vorgesehen, dass ein Tragbalken vorgesehen ist, welcher die Antriebsrolle beziehungsweise -rad oder -walze auch trägt. In diesem Fallbeispiel nimmt der Tragbalken auch den Antriebsmotor für die Antriebsrolle auf. Eine solche Ausgestaltung erlaubt im Reparaturfall eine schnelle Auswechselwirkung dieser Baugruppe. Ein weiterer Vorteil liegt aber auch darin, dass der Tragbalken wippend oder drehbar, insbesondere mittig um eine horizontal oder auch rechtwinklig zur Transportrichtung orientierte Achse gelagert ist. Hierdurch wird sichergestellt, dass die Transporteinheit beziehungsweise die Antriebsrolle immer sicher und zuverlässig, auch bei unterschiedlichen werkstückdicken, auf diesem anliegt.

Günstigerweise erstreckt sich dabei der Tragbalken parallel zur Transportrichtung. Bevorzugterweise befinden sich dabei an den jeweiligen Enden des Tragbalkens Antriebsrollen, -räder oder -walzen.

Des Weiteren ist in einer Variante der Erfindung vorgesehen, dass ein Antriebsbalken vorgesehen ist, welcher an einem Ende eine Antriebsrolle-, -rad oder -walze trägt, wobei der Antriebsbalken wippend beziehungsweise drehbar am anderen Ende um eine horizontal oder rechtwinklig zur Transportrichtung orientierte Achse gelagert ist. Ein solches Transportsystem ist aufgrund der drehbaren Lagerung der unterschiedlichen Werkstückhöhen problemlos und auch selbstständig anpassbar.

In einer weiteren Variante wird vorgeschlagen, dass zwei voneinander unabhängige Antriebsbalken vorgesehen sind. Diese werden dabei geschickterweise auf einer gemeinsamen Drehachse angeordnet und werden bei Bedarf nacheinander für den Transport des Holzwerkstückes eingesetzt.

In einer bevorzugten Ausgestaltung der Erfindung ist vorgesehen, dass das Bearbeitungsaggregat mindestens ein Werkzeug aufweist, welches zumindest entlang einer Achse, welche bevorzugt rechtwinklig zur Transportrichtung des Transportsystemes ist, bewegbar beziehungsweise positionierbar ist und während der Bearbeitung eine Überlagerung der Bewegung des Holzwerkstückes (durch das Transportsystem) mit der Bewegung des Werkzeuges vorgesehen ist. Üblicherweise wird das Werkzeug in Richtung auf das Werkstück zu- und wegbewegbar sein, um das Werkzeug in Eingriff auf das Holzwerkstück zu bringen und wieder freizugeben. In der Regel werden Beweglichkeiten längs zweier oder mehrerer Achsen des Werkzeuges in dem Bearbeitungsaggregat vorgesehen sein. Die Bewegung des Holzwerkzeuges entlang dieser verschiedenen Achsen (sei es auf das Werkstück zu und weg oder rechtwinklig zur Transportrichtung und der vorgenannten Achse) erlaubt es, entsprechende Bahnen zu fahren und auch schräge Fräsungen und dergleichen vorzusehen. Dadurch gewinnt eine erfindungsgemäß ausgestaltete Bearbeitungsanlage enorm an Flexibilität und an Einsatzmöglichkeiten, bei geringen Platzbedarf einer solchen Anordnung, welches einen zusätzlichen Vorteil darstellt.

Günstigerweise werden dabei die Werkzeuge auf einem Werkzeugschlitten angeordnet. Es ist eine Führung vorgesehen, die die Werkzeuge schlittenartig aufnimmt. Der Schlitten besitzt dabei einen entsprechenden Werkzeugantrieb und eine Einrichtung, die ein einfaches und schnelles Auswechseln der Werkzeuge erlaubt.

Das Bearbeitungsaggregat dient dabei für die Bearbeitung von Holzwerkstücken, wobei erfindungsgemäß vorgeschlagen wird, dass das Bearbeitungsaggregat mindestens zwei verschiedene Werkzeuge aufweist, wobei ein erstes Werkzeug über dem Holzwerkstück und ein zweites Werkzeug unter dem Holzwerkstück gelagert ist. Eine solche Kombination mehrerer unterschiedlicher Werkzeuge in einem Aggregat führt auch bei einem vom Einsatzzweck einer Bearbeitungsanlage losgelösten Einsatz zu einer erheblichen Platzersparnis, da mit einer Maschine dann zum Beispiel sowohl Fräs- als auch Sägebearbeitungen durchführbar sind. Gerade aber der Einsatz eines solchen Bearbeitungsaggregates in einer Bearbeitungsanlage eröffnet entsprechende Vorteile. Das Bearbeitungsaggregat, wie dargestellt, ist aber auch als Werkstattmaschine (ohne Transportsystem) einsetzbar.

Im Stand der Technik greift das Werkzeug von einer Seite her auf das Holzwerkstück ein. Oftmals wird dabei das Werkzeug von unten gegen das Werkstück geführt. Im Stand der Technik werden weitere Werkzeuge in eigenen Aggregaten längs des Transportweges platzaufwendig aufgestellt. Gerade aber die Anordnung von Werkzeugen über dem Werkstück erlaubt eine erhebliche Platzersparnis, da ein zweites Aggregat somit in einfacher Weise eingespart werden kann.

Bevorzugt werden als Werkzeuge bei der Holzverarbeitung zum Beispiel Sägen oder spanende beziehungsweise spanabhebende Werkzeuge wie Fräser, Fingerfräser, Walzenfräser, Bohreinheiten oder Hobelwellen eingesetzt. Des Weiteren zählen zu den Werkzeugen aber auch Markier- beziehungsweise Beschriftungswerkzeuge, die zum Beispiel beim Abbinden von Nutzen sind. Natürlich ist auch der Einsatz von Sonderwerkzeugen möglich. Die Erfindung ist in der Anordnung der Werkzeuge flexibel. Zum Beispiel ist es möglich, das Sägeblatt oberhalb oder unterhalb des Werkstückes anzuordnen und die in Opposition dazu stehenden weiteren zweiten Werkzeuge, zum Beispiel Fräser, Fingerfräser oder auch andere Spezial- oder Sonderwerkzeuge auf der Oberseite anzuordnen. Durch eine entsprechende Anordnung der Werkzeuge wird Baulänge an dem Bearbeitungsaggregat eingespart, was für eine optimale Platzausnutzung in einer Werkstatt von Vorteil ist. Dies geht aber auch gleichzeitig mit einer Erhöhung der Genauigkeit bei der Bearbeitung einher. Da im Bereich des Werkzeuges eine Führung des Holzwerkstückes nicht möglich ist, ist es von Vorteil, wenn die Längen, in welchen das Holzwerkstück ungeführt ist, möglichst kurz sind. Dieses Ziel wird natürlich dadurch erreicht, wenn das Bearbeitungsaggregat selber möglichst platzsparend ausgelegt ist. Durch den erfindungsgemäßen Vorschlag werden also zwei voneinander unabhängige Vorteile erreicht.

In einer vorteilhaften Ausgestaltung der Erfindung ist vorsehen, dass die Werkzeuge insbesondere das Sägeblatt von oben her das Holzwerkstück bearbeitet. Abgeschnittene Klötze oder Abschnitte fallen damit automatisch selbstständig nach unten und behindern nicht den Werkzeugeinsatz.

Insbesondere ist es hierbei von Vorteil, dass die verschiedenen Transportsysteme so ausgebildet sind, dass diese in das Bearbeitungsaggregat hineingreifen und auch noch dort eine Führung des Werkstückes anstreben beziehungsweise auch erreichen. Zum Beispiel ist die Walze des ersten Transportsystemes möglichst nahe an das Bearbeitungsaggregat herangerückt, der zangenartige Greifer des zweiten Transportsystemes vermag in das Bearbeitungsaggregat hineinzugreifen.

In einer erfindungsgemäßen Ausgestaltung wird dabei vorgeschlagen, dass die ersten und zweiten Werkzeuge jeweils unabhängig voneinander oder gemeinsam gekoppelt zumindest entlang einer Achse beweglich und auch steuerbar positionierbar sind. Gerade wenn im Zusammenhang mit dem Einsatz eines erfindungsgemäßen Bearbeitungsaggregates in der ebenfalls erfindungsgemäßen Bearbeitungsanlage gewünscht wird, dass entsprechende Bahnfahrten möglich sind, zum Beispiel um schräge Bearbeitungen vorzusehen, ist es günstig, wenn auch die Werkzeuge entsprechend beweglich und auch gesteuert positionierbar sind. Die Steuerung sieht dabei vor, dass entsprechend der gewünschten Bahn eine passende, geregelte Überlagerung der Geschwindigkeitskomponenten des Vorschubes des jeweiligen Transportsystemes (des ersten und zweiten Transportsystemes) und den Bewegungsantrieben des Werkzeuges besteht.

Werden mehrere Werkzeuge eingesetzt, so besteht eine Möglichkeit darin, für jedes Werkzeug eine eigene Bewegungsachse mit entsprechenden Antrieben zu realisieren. Eine andere Möglichkeit besteht darin, die zum Beispiel in Opposition (also oben und unten bezüglich des Holzwerkstückes) angreifenden Werkstücke gemeinsam auf einem das Holzwerkstück umfassenden Rahmen zu montieren und diesen Rahmen durch einen Antrieb zu bewegen. Eine solche Anordnung spart einen separaten Antrieb der Werkzeuge ein. Besonders vorteilhaft ist eine solche Ausgestaltung dann, wenn nicht nur zwei Werkzeuge eingesetzt werden sollen, sondern ein drittes und viertes an den jeweiligen Seitenflächen des Holzwerkstückes. Dadurch werden die Bewegungsachsen doppelt genützt.

Neben dieser gemeinsam gekoppelten Bewegung ist es natürlich möglich, die einzelnen Werkzeuge auch getrennt voneinander zu bewegen, zum Beispiel im Rahmen einer portalartig, stern- oder ständerartigen Anordnung.

Das Bearbeitungsaggregat kann problemlos eine Bearbeitung entlang einer dritten, vierten, fünften Achse vorsehen, wobei dann neben translatorische Achsen zum Beispiel als vierte und fünfte Achse Rotationsachsen (Neigungs- oder Drehachsen) bestehen. Letztendlich führt dies zu einem Verschwenken beziehungsweise Verdrehen des Werkzeuges. Die Achsen können dabei horizontal und/oder vertikal orientiert, parallel oder rechtwinklig zur Transportrichtung angeordnet sein.

Sowohl das über dem Werkstück, wie auch das unter dem Werkstück befindliche Werkzeug ist dabei entsprechend dreh- oder neigbar. Die Erfindung lässt es dabei offen, ob beide Werkzeuge oder nur ein Werkzeug eine entsprechende Beweglichkeit um mehrere Achsen aufweist.

Es ist von Vorteil, wenn die Werkzeuge in einem Werkzeugmagazin, insbesondere die zweiten Werkzeuge in einem drehbar gelagerten Werkzeugrevolver, vorgehalten werden. Durch den Einsatz eines Werkzeugrevolvers, bei welchem die Werkzeuge bereits auf Antriebsspindeln aufgesetzt montiert vorgehalten werden, werden Rüstzeiten eingespart. Alternativ ist es natürlich möglich, die Werkzeuge aus einem Werkzeugmagazin gegebenenfalls auch aus einem Revolverwerkzeugmagazin oder dergleichen vorzuhalten und bei Bedarf einzuwechseln. Beide Optionen sind erfindungsgemäß möglich.

Es ist zum Beispiel vorgesehen, dass durch das zweite Werkzeug unterhalb des Holzwerkstückes eine Fräsbearbeitung durchgeführt wird. Für die verschiedenen Fräsaufgaben werden dabei eine Vielzahl unterschiedlicher Fräser wie Fingerfräser, Walzenfräser, Kettenstemmer, Schlitzgerät, unterschiedliche Sägeblätter, Sonderwerkzeuge und so weiter vorgesehen. Zusätzlich kann auch eine Bohrmaschine oder Bohreinheit in dem Revolverkopf angeordnet sein. Durch eine solche Ausgestaltung wird eine hohe Flexibilität erreicht und der Platz in einem Bearbeitungsaggregat optimal genützt. Dabei ist die Anordnung eines Revolverwerkzeugmagazines auf den Bereich unterhalb des Holzwerkstückes nicht beschränkt, dieses kann selbstverständlich auch oberhalb, oder seitlich neben dem Holzwerkstück angeordnet werden.

Des weiteren umfasst die Erfindung auch ein Transportsystem für die Bearbeitungsanlage, wobei das Transportsystem für einen Transport und gegebenenfalls auch eine Positionierung des Holzwerkstückes dient und das Transportsystem eine längs einer Führungsbahn verfahrbare Kopplungseinheit beziehungsweise Positionierungen aufweist.

Als Kopplungseinheit dienen zum Beispiel in das Holzwerkstück eingepresste Dornen, Dornenplatten oder aufgepresste Gummiplatten und dergleichen. Letztendlich ist ein möglichst schlupffreier, bevorzugt kraft- und/oder formschlüssiger, Verbund zwischen dem Transportsystem einerseits und dem Holzwerkstück andererseits herzustellen. Befindet sich aber nun das vordere Ende eines zu ergreifenden Holzwerkstückes noch in dem Bearbeitungsaggregat und reicht nicht auf die Ablaufseite heraus, so ist es günstig, ein Kopplungselement anzubieten, welches in das Bearbeitungsaggregat einzugreifen vermag und dieses herauszieht.

Erfindungsgemäß besteht die Kopplungseinheit aus zwei zusammenwirkenden Zangenteilen, bei welchen zumindest eines beweglich ausgebildet ist und die beiden Zangenteile das Holzwerkstück oben und unten ergreifen. Gerade wenn das Bearbeitungsaggregat portalartig ausgebildet ist, erlaubt eine solche Ausgestaltung, dass die Kopplungseinheit von vorne auf das vordere Ende des Holzwerkstückes auffährt und dieses ergreift und führt. Hierzu ist es günstig, wenn die Zangenteile länglich ausgebildet sind und sich parallel zur Transportrichtung erstrecken.

Da die Zangenteile letztendlich einem kraft- und/oder formschlüssigen Verbund mit einem Holzwerkstück dienen, ist es günstig, dass diese entweder kraft- und/oder formschlüssig mit dem Holzwerkstück zusammenwirken. Dabei wird vorgeschlagen, dass das Zangenteil backenartig oder auch schneidenartig ausgebildet ist, je nachdem, ob nur ein Kraft- oder auch ein Formschluss angestrebt wird.

Weitere bevorzugte Ausgestaltungen der Erfindung sind in den Unteransprüchen beschrieben.

Die Erfindung ist in der Zeichnung schematisch dargestellt. Es zeigen:
- **Fig. 1**: eine Seitenansicht der erfindungsgemäßen Bearbeitungsanlage und
- **Fig. 2**: ein Detail der erfindungsgemäßen Bearbeitungsanlage.

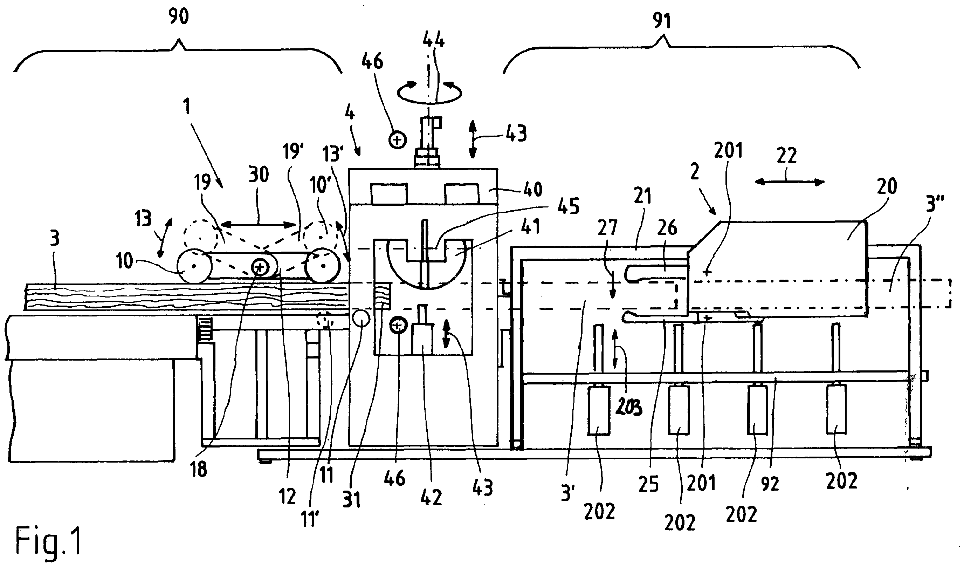

Figur 1 zeigt eine erfindungsgemäße Bearbeitungsanlage. Der Zulauf 90 befindet sich links von dem Bearbeitungsaggregat 4, der Ablaufbereich 91 ist rechts davon angeordnet.

Im Zulaufbereich 90 ist ein erstes Transportsystem 1 vorgesehen. Es dient dazu, ein Holzwerkstück 3, wie angedeutet, von links in das Bearbeitungsaggregat 4 einzufördern. Die Bewegung des Holzwerkstückes 3 ist mit dem Doppelpfeil 30 angedeutet.

Dabei übernimmt das Bearbeitungsaggregat 4 nicht nur eine Bearbeitung des vorderen Endbereiches 31, sondern dient auch dazu, an dem gestrichelt angedeuteten Holzwerkstück 3' weitere Bearbeitungen vorzusehen.

Auf der Ablaufseite 91 befindet sich das zweite Transportsystem 2. Dieses ist augenscheinlich anders ausgestaltet wie das erste Transportsystem I, ohne aber hierauf die Erfindung zu beschränken. Es ist durchaus möglich, dass auf beiden Seiten des Bearbeitungsaggregates gleichwirkende und/oder gleich aufgebaute Transportsysteme Verwendung finden.

Das zweite Transportsystem 2 besteht aus einer Führungsbahn 21, auf welcher die Kopplungseinheit 20 verfahrbar ist. Die Kopplungseinheit 20 wird auch als Positionierwagen bezeichnet. Diese beiden Begriffe sind im Sinne dieser Anmeldung gleichwertig. Die Verfahrbarkeit ist durch den Doppelpfeil 22 angedeutet. Die Kopplungseinheit sorgt für einen form- und oder kraftschlüssigen Verbund mit dem Holzwerkstück 3'.

Das erste Transportsystem 1 ist mit angetriebenen Antriebsrollen 10 ausgestattet, wobei das Holzwerkstück 3 zum Beispiel auf einem Maschinentisch oder einer Rollenbahn aufliegt. Derart wird das Holzwerkstück 3 transportiert. Es ist dabei günstig, wenn die Transporteinheit I, die von oben auf das Holzwerkstück 3 wirkt, höhenverstellbar ist, um sich so bezüglich seiner Förderwirkung den verschiedenen Dicken des Holzwerkstück 3 anpassen zu können. Günstigerweise wird zum Beispiel eine entsprechende vertikale Führung angeordnet, oder aber der die Antriebsrollen 10 tragende Tragbalken 12 ist wippend oder drehbar gelagert (siehe Pfeile 13) aufgehängt, wodurch sichergestellt wird, dass zumindest eine Antriebsrolle 10 in Eingriff mit dem Holzwerkstück 3 steht. Es ist auch möglich Endlosförderer, zum Beispiel Kettenförderer und dergleichen einzusetzen.

Gestrichelt ist in Fig. 1 noch eine weitere Ausgestaltung gezeigt. Es sind zwei Antriebsbalken 19, 19' vorgesehen, welche an ihrem Ende eine Antriebsrolle 10' besitzen. Die beiden Antriebsbalken 19, 19' sind um die Drehachse 18 drehbar beziehungsweise wippend gelagert. Diese Achse ist horizontal beziehungsweise rechtwinklig zur Transportrichtung 30 gelagert. Gegebenenfalls ist es auch möglich, das Holzwerkstück 3 rückwärts zu transportieren, wenn dies für einen Bearbeitungsschritt von Vorteil ist.

Da die beiden Antriebsbalken 19, 19' voneinander unabhängig sind, können diese nacheinander oder auch nur einzeln in Einsatz gebracht werden. Dabei ist gefunden worden, dass diese Anordnung auch für das Fördern von Stapeln von Brettern günstig ist, da die Reibung der einzelnen Bretter untereinander so groß ist, dass ein gleichmäßiger Transport erfolgt.

Es ist von Vorteil, wenn zumindest ein, bevorzugt beide Transportsystem/e, ein Positioniersystem mit einem entsprechenden Meßsystem aufweist. Das Positioniersystem umfasst dabei natürlich die Möglichkeit, das Holzwerkstück 3 zu transportieren sowie Mittel um zu erkennen, dass die gewünschte Position eingenommen ist. In der Regel wird dies durch eine entsprechende Normierung oder Initialisierung bei Beginn der Arbeiten und einer Wegmessung erreicht, wodurch die relative Lage des Positioniersystemes bezüglich eines entsprechenden Indexierungs-, Initialisierungs- oder Normierungspunktes festgelegt wird und dadurch auch die Lage des Holzwerkstückes 3 auf der Bearbeitungsanlage genau bestimmbar ist. Es ist zum Beispiel vorgesehen, dass das Meßsystem von einem auf dem Holzwerkstück abrollenden Meßrad 11 gebildet ist. Das Meßrad ist insofern Teil des zum ersten Transportsystem 1 gehörenden Meßsystemes.

In Fig. 1 sind zwei Varianten der Anordnung des Maßrades 11, 11' gezeigt. In einer ersten Variante befindet sich das Meßrad 11' (gestrichelt dargestellt) direkt unter dem Antriebsrad 10'. Dadurch wird ein sicheres Anliegen des Meßrades an dem Holzwerkstück erreicht, wodurch die Messung entsprechend genau ist. In der anderen Variante befindet sich das Meßrad 11 im Bearbeitungsaggregat möglichst nahe bei dem Bearbeitungsaggregat. Das Meßrad rollt möglichst schlupflos auf der Oberfläche des Holzes ab. Hierzu dienen entsprechende Beschichtungen oder die Reibung erhöhende Mittel (Gummirad, Rillung usw.).

Es ist von Vorteil, wenn zwischen dem Antriebsrad 10 und dem Bearbeitungsaggregat 4 beziehungsweise den Werkzeugen 41, 42 ein möglichst kurzer Abstand besteht. Die Genauigkeit einer solchen Anordnung ist höher, da der freikragende, nicht geführte Bereich entsprechend geringer ist und somit Maßungenauigkeiten vermieden werden.

Es ist dabei günstig, dass das Meßrad 11 im Bereich des Bearbeitungsaggregates 4 vorgesehen ist, da insbesondere die Lage des Holzwerkstückes 3 im Bezug auf das Bearbeitungsaggregat 4 für eine genaue Positionierung von Interesse ist.

Insbesondere in dem zweiten Transportsystem 2 ist das Meßsystem in der Führungsbahn 21 beziehungsweise in der Kopplungseinheit 20 realisiert und aus dem Stand der Technik hinlänglich bekannt.

Das Bearbeitungsaggregat 4 ist, wie hier dargestellt, mit zwei Werkzeugen 41, 42 ausgestattet. Hierbei ist der Begriff Werkzeug nicht als einzelnes Werkzeug zu verstehen, sondern kann durchaus auch eine Werkzeuggruppe oder auch Werkzeugsorte umfassen. Erfindungsgemäß wird ein Bearbeitungsaggregat 4 vorgeschlagen, welches mindestens zwei verschiedene Werkzeuge 41, 42 aufweist, von welchen ein erstes Werkzeug 41 über dem Holzwerkstück 3 und ein zweites Werkzeug 42 unter dem Holzwerkstück 3 gelagert ist. Die Bearbeitungsanlage benötigt dabei nicht ein so komplex ausgestattetes Bearbeitungsaggregat, jedoch ist dies für entsprechend höherwertige Bearbeitungen von Vorteil.

Es ist vorgesehen, dass das erste Werkzeug 41 portalartig 40 geführt ist. Dadurch ist eine Bewegung senkrecht zur Blattebene (Y-Achse) möglich. Es können daher entsprechende Positionierungen für das als Sägeblatt ausgebildete erste Werkzeug 41 angefahren werden. Die Säge vermag einen Z-Hub auszuführen, sie ist absenkbar beziehungsweise anhebbar. optional ist die Säge auch dreh- beziehungsweise neigbar. Auch ist ein Bahnfahren möglich. Hierbei wird die Bewegung des Werkstückes ausgenützt.

Das zweite Werkzeug 42 ist in dem hier gezeigten Ausführungsbeispiel unterhalb des Holzwerkstückes 3 angeordnet. Hierzu ist zum Beispiel eine ständerartige Lagerung vorgesehen. Sowohl das erste Werkzeug 41 wie auch das zweite Werkzeug 42 sind in der Vertikalen beweglich, welches jeweils durch die Doppelpfeile 43 angedeutet ist. Dabei kann diese Bewegung jeweils getrennt oder auch gemeinsam erfolgen, hierauf legt sich die Erfindung nicht fest.

Es ist von Vorteil, wenn die Werkzeuge 41, 42 dreh- beziehungsweise neigbar ausgebildet sind. Zum Beispiel ist angedeutet, dass das Kreissägenblatt 41 um eine vertikale Achse drehbar ist, die Verschwenkbarkeit ist mit dem Bezugszeichen 44 angedeutet. Das Verneigen ist mit der Bezugsziffer 45 gekennzeichnet. Die Anordnung ist exemplarisch für das obere Werkzeug 41 gezeigt, betrifft aber in gleicher Weise auch das untere Werkzeug 42.

Des weiteren ist vorgesehen, dass die Werkzeuge 41, 42 zum Beispiel einen Querhub 46, hier rechtwinklig zur Transportrichtung 30 des Werkstückes auszuführen vermag. Auch hier ist es möglich, die Bewegung des unteren und oberen Werkzeuges untereinander getrennt oder gekoppelt ausführen zu lassen. Bei der getrennten Ausgestaltung wird eine höhere Flexibilität erreicht, jedoch ist für jede bewegliche Achse ein eigener Antrieb notwendig, die gekoppelte Ausgestaltung führt zu einer nicht zu komfortablen Lösung, nutzt aber den Achsantrieb für zwei Werkzeuge.

Wie in der Zeichnung ausgeführt, ist das erste Werkzeug 41 als Säge ausgebildet und das zweite Werkzeug 42 wird von Bohr- oder Fräswerkzeugen gebildet. Diese Anordnung ist insbesondere im Betrieb von Vorteil, da von der Säge abgetrennte Holzstücke bei dieser Variante der Erfindung problemlos nach unten abfallen und so nicht den Transport des Holzwerkstückes 3 behindern.

Besonders vorteilhaft ist die Ausgestaltung des zweiten Transportsystemes 2. Es besteht aus einem Positionierwagen beziehungsweise einer Kopplungseinheit 20, welche auf einer Führungsbahn 21 verschieblich ist. Zum Ergreifen des Holzwerkstückes 3 weist die Kopplungseinheit zwei miteinander zusammenwirkende Zangenteile 25, 26 auf. Es wird vorgeschlagen, dass zumindest eines der Zangenteile beweglich um die Drehachse 201 ausgebildet ist (siehe Pfeil 27) und die beiden Zangenteile 25, 26 das Holzwerkstück 3 oben und unten ergreifen. Die in der Zeichnung angedeutete Stellung erfasst das gestrichelt dargestellte Holzwerkstück 3'. Die Anordnung ist dabei so gewählt, dass die Zangenteile 25, 26 das Holzwerkstück 3 seitlich, gegebenenfalls entlang der gesamten Holzwerkstücklänge zu ergreifen vermag. Dadurch wird die maximale Länge eines zu bearbeitenden Werkstückes nicht beschränkt. Es ist vorgesehen, dass das zweite Transportsystem das Holzwerkstück 3 nachfasst. Für einen Weitertransport des Holzwerkstückes geben hierzu die Zangenteile das Holzwerkstück frei, die Kopplungseinheit verfährt an eine andere Stelle, bevorzugt in Richtung des Bearbeitungsaggregats, wo dann die Zangenteile das Holzwerkstück wieder erfassen. Eine solche Verfahrensweise ist natürlich auch mit anders ausgestalteten Positionierwagen möglich. In Fig. 1 ist ein Holzwerkstück 3" gezeigt, welches sich über das rechte Ende der Bearbeitungsanlage hinaus erstreckt. Die Anordnung ist so gewählt, dass trotzdem ein Transport, wie vorgeschildert, möglich ist.

Sehr günstig ist es dabei, dass beliebige Bahnfahrten möglich sind, das heißt, die Bewegungen der Werkzeuge 41, 42 frei kombinierbar sind mit der Transportbewegung, wobei die Transportbewegung des Holzwerkstückes 3 entweder von dem ersten Transportsystem 1 und/oder von dem zweiten Transportsystem 2 herrühren mag.

In der Figur 1 ist angedeutet, dass die Zangenteile 25, 26 länglich ausgebildet sind und sich parallel zur Transportrichtung 22 erstrecken. Diese erfindungsgemäße Ausgestaltung erlaubt es, dass das zweite Transportsystem 2 das vordere Ende 31 des Holzwerkstückes 3 zum Beispiel in dem Bearbeitungsaggregat ergreift und dieses aus dem Bearbeitungsaggregat 4 herausziehen kann. Es kann dann ein Umgreifen wie oben geschildert erfolgen.

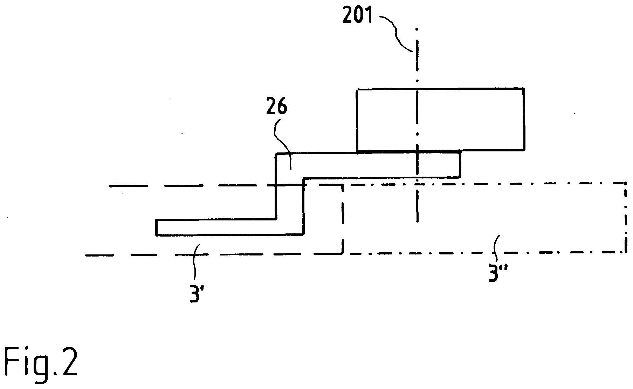

In Fig. 2 ist in einer Detailansicht das Zangenteil 26 von oben gezeigt. Das Zangenteil ist Doppel-L oder Z-artig abgewinkelt, wobei der vordere Bereich, welcher mit dem Holzwerkstück 3 zusammenwirkt, auf diesem liegt und der hintere Bereich, wo das Zangenteil 26 am Kopplungselement 20 gelagert ist, seitlich neben dem Holzwerkstück angeordnet ist, um eine Kollision zu vermeiden. Das Zangenteil 26 ist um die Achse 201 drehbar. Es sind Antriebe für das Zangenteil 26 vorgesehen für einen sicheren Verbund des Zangenteiles 26 mit dem Holzwerkstück.

Gegebenenfalls sind aber auch Fixierungen oder Spanner vorgesehen, zum Beispiel wenn eine stationäre Bearbeitung (zum Beispiel Kappen) erfolgen soll.

Die Zangenteile 25, 26 wirken dabei kraft- und/oder formschlüssig mit dem Holzwerkstück zusammen.

Der beispielhafte Ablauf in einer erfindungsgemäßen Bearbeitungsanlage ist wie folgt.

Ein Holzwerkstück 3 wird im Zulaufbereich 90 auf die Bearbeitungsanlage aufgegeben. Das Holzwerkstück 3 wird von dem ersten Transportsystem 1 ergriffen und in das Bearbeitungsaggregat 4 eingefördert. Das erste Transportsystem 1 weist ein Meßsystem auf, das dazugehörige Meßrad 11 kommt in Eingriff mit dem Holzwerkstück 3 und bestimmt die entsprechende Position. Das Holzwerkstück 3 wird nun zum Beispiel indexiert (zum Beispiel durch eine Lichtschranke oder dergleichen) oder zu einer Quersäge transportiert werden, um dort einen Kappschnitt zu erfahren. Zu diesem Zeitpunkt ist es von Vorteil, wenn das Positioniersystem entweder des ersten oder des zweiten oder beider Transportsysteme normiert beziehungsweise initialisiert wird, da jetzt eine definierte Position des Holzwerkstückes 3 in dem Bearbeitungsaggregat 4 vorliegt.

Entgegen der Lösung nach dem Stand der Technik besteht jetzt die Möglichkeit, dass das Bearbeitungsaggregat zusätzliche Bearbeitungen auf dem Holzwerkstück ausführt. Dabei kann das Bearbeitungsaggregat 4 nur ein Werkzeug 41 aufweisen, welches gegebenenfalls auch den Kappschnitt ausgeführt hat. Günstigerweise besitzt aber das Bearbeitungsaggregat 4 eine Vielzahl unterschiedlicher Werkzeuge, um entsprechend komplexe Bearbeitungen zu erlauben. Dabei ist es günstig, dass die verschiedenen Bearbeitungswerkzeuge entlang mehrerer translatorischer Achsen (die nach Möglichkeit ein karthetisches System bilden sollen) beweglich sind und gegebenenfalls in Ausnützung der Transportbewegung des Holzwerkstückes auch Längsbearbeitungen erfolgen können. Dabei ist die Bearbeitungsanlage so optimiert, dass entweder das erste Transportsystem 1 oder das zweite Transportsystem 2 oder beide Transportsysteme gemeinsam eine Bewegung und Führung des Holzwerkstückes durch das Bearbeitungsaggregat leisten. Je höher die Anzahl von verschiedenen Werkzeugen in dem Bearbeitungsaggregat 4 ist, desto komplexere Bearbeitungen sind möglich und umso kürzer baut die erfindungsgemäße Bearbeitungsanlage im Vergleich mit entsprechenden Bearbeitungsanlagen mit gleicher Funktionalität nach dem Stand der Technik, da bei diesen jede weitere Werkzeuggruppe in einem eigenständigen Bearbeitungsaggregat, räumlich getrennt von einem anderen Bearbeitungsschritt angeordnet war.

Ist die Bearbeitung abgeschlossen, so zieht das zweite Transportsystem 2 mit Hilfe der Kopplungseinheit 20 das Holzwerkstück 3' komplett aus dem Bearbeitungsaggregat heraus und legt das Holzwerkstück 3 auf einem Auflagetisch 92 im Ablaufbereich 91 ab. Es ist ein Abschieber vorgesehen, der das Holzwerkstück 3 rechtwinklig zu seiner Längserstreckung wegschiebt, wobei der Abschieber unter dem Transportsystem 2 kollisionsfrei verfährt. Auf einem seitlichen Abnahmetisch ist das Holzwerkstück 3 entnehmbar. Alternativ wird das Holzwerkstück 3 von dem ersten Transportsystem ausgefördert, das zweite Transportsystem fährt wieder zurück beziehungsweise fährt dem Werkstück entgegen.

Erfindungsgemäß ist vorgesehen, dass sich die Transportbereiche des ersten und des zweiten Transportsystemes 1, 2 im Bereich des Bearbeitungsaggregates 4 einander anschließen oder teilweise überlappen. Günstigerweise überlappen sich diese beiden Transportbereiche des ersten und zweiten Transportsystemes, wie dies zum Beispiel mit der klauen- oder zangenhaften Ausgestaltung des Kopplungselementes 20 vorgesehen ist, um ein sicheres Übernehmen des Holzwerkstückes 3 in dem Bearbeitungsaggregat 4 zu erreichen.

Auf der Ablaufseite 91 ist ein Auflagetisch 92 gezeigt, der erheblich unter den Zangenteilen 25 liegt. Des Weiteren sind Auflagen 202 gezeigt, die absenkbar (Doppelpfeil 203) sind. Die Auflagen 202 sind entfernbar, wodurch das Holzwerkstück so weit herunterfällt, dass die Bewegung des Kopplungselementes 20 nicht behindert wird. Die Anschläge 202 sind hierbei absenkbar ausgebildet, sie können aber auch zur Seite wegbewegt werden, um das gleiche Ergebnis zu erreichen.

Sobald das Holz freigegeben ist, das heißt, nicht mehr von den Zangenteilen 25, 26 gehalten ist, oder spätestens aber wenn der Ausstoßer das Holz wegbefördert, fährt die Kopplungseinheit wieder zurück zur Bearbeitungsanlage um ein neues Holzwerkstück 3 aufzunehmen.

Im Zulaufbereich 90 ist ein Aufgabequerförderer vorgesehen, der die Holzwerkstücke zufördert. In der Regel werden die Holzwerkstücke auf einem Tisch jeweils parallel zueinander aufgelegt, von welchem dann die Holzwerkstück in die Bearbeitungsanlage eintransportiert und vereinzelt werden. Hierfür dient der Auflagequerförderer, der zum Beispiel als Förderkette ausgebildet ist.

Es bestehen nunmehr zwei Varianten, wie das Holzwerkstück im Zulaufbereich 90 eingefördert wird.

Bei der ersten Variante, diese wird zum Beispiel bei verhältnismäßig großen oder schweren Holzwerkstücken eingesetzt, sind an dem Aufgabequerförderer ein oder mehrere Einzieher vorgesehen, an welche/n die Holzwerkstücke herantransportiert und ausgerichtet werden, bevor der/die Einzieher das ausgerichtete Holzwerkstück dann ergreift und einzieht und das erste Transportsystem das Holzwerkstück weitertransportiert. Die Einzieher werden dabei anschlagartig in den Transportweg des Auflagequerförderers gebracht, wodurch das Holzwerkstück an den Einzieher ausgerichtet wird. Die Einzieher ergreifen dann das Holzwerkstück und fördern dieses in den Bereich des ersten Transportsystemes, von welchen es dann für den Weitertransport übernommen wird. In der Regel besitzt die Bearbeitungsanlage in diesem Bereich Rollen, die ein Abrollen des Holzwerkstückes in ~ Förderrichtung des Transportsystemes erlauben. Dies erleichtert den Transport von großen, schweren Holzwerkstücken.

In einer Variante der Erfindung ist gefunden worden, dass es von Vorteil ist, wenn der Auflagequerförderer das Holzwerkstück an einen Anschlag oder eine Anschlagschiene fordert, und das erste Transportsystem in Förderrichtung des Auflagequerförderers vor dem Anschlag beziehungsweise der Anschlagschiene angeordnet ist und das erste Transportsystem ein Holzwerkstück weitertransportiert, sobald dieses an dem Anschlag/Anschlagschiene anliegt. Auf eine Rollenbahn in Förderrichtung des Transportsystemes wird hierbei verzichtet. Eine solche Anordnung ist zum Beispiel bei verhältnismäßig leichten Holzwerkstücken wie einzelnen Brettern und so weiter von Vorteil. Die auftretende Reibungskraft führt nicht zu einer Blockade des Transportsystemes. Der Vorteil einer solchen Anordnung liegt darin, dass das Zufördern der nächsten Holzwerkstücke kontinuierlich erfolgt und nicht erst ein Einzieher in Position gebracht werden muss, der das Holzwerkstück ergreifen, einfördern, wegschwenken und wieder von neuem positionieren muss. Zum Beispiel fördert der Aufgabequerförderer kontinuierlich die Holzwerkstück heran und ein abtransportiertes Holzwerkstück gibt bereits wieder die Anschlagschiene beziehungsweise den Anschlag frei, um das nächste, zweite Holzwerkstück in Position zu bringen. Die Geschwindigkeit einer solchen Bearbeitungsanlage steigt entsprechend. Es ist ein Aspekt der Erfindung, die Bearbeitungsanlage möglichst zeitoptimiert auszulegen, also bei jedem Bearbeitungsschritt Bearbeitungszeiten, Leerhübe und so weiter einzusparen, um eine möglichst schnelle Bearbeitung zu erreichen.

Dabei ist es günstig, dass die Breite der Antriebsrolle, -rad, oder -walze geringer ist, als die geringste Breite des zu bearbeitenden Holzwerkstückes. Somit wird sichergestellt, dass nur ein Holzwerkstück tatsächlich vereinzelt wird und in die Bearbeitungsanlage eingezogen wird. Die Breite der Rolle reicht nicht aus, um zwei parallel aneinanderliegende Holzwerkstücke zu ergreifen und einzufördern.

## Patentansprüche

1. Bearbeitungsanlage zum Bearbeiten von Holzwerkstücken, Kanthölzern, Brettern, Brettstapeln und dgl. mit einem Bearbeitungsaggregat (4), einem im Zulaufbereich (90) des Bearbeitungsaggregats (4) angeordneten ersten Transportsystem (1), welches von mindestens einem angetriebenen Antriebsrad (10), einer Antriebsrolle oder einer Antriebswalze gebildet wird und ein eingefördertes Holzwerkstück (3) an das Bearbeitungsaggregat (4) herantransportiert, und einem im Ablaufbereich (91) des Bearbeitungsaggregats (4) angeordneten zweiten Transportsystem (2), wobei das erste und/oder das zweite Transportsystem (1, 2) das Holzwerkstück (3) für oder während weiterer Bearbeitungen des Bearbeitungsaggregats (4) transportiert und wobei zumindest ein Transportsystem (1, 2) ein mit einem Messsystem zusammenwirkendes Positioniersystem aufweist, wodurch eine maßgenaue Positionierung und Bahnfahren des Holzwerkstücks (3) in dem Bearbeitungsaggregat (4), d.h. eine Überlagerung der Bearbeitung und der Transportbewegung des Holzwerkstückes (3), ermöglicht wird, wobei das zweite Transportsystem (2) als Kopplungseinheit (20) in Form eines auf einer Führungsbahn (21) verfahrbaren Positionierwagens mit zwei miteinander zusammenwirkenden Zangenteilen (25, 26) ausgebildet ist, welcher zum Ergreifen und Nachgreifen des Holzwerkstücks (3) entlang der gesamten Holzwerkstücklänge seitlich neben dem Holzwerkstück (3) angeordnet ist, **dadurch gekennzeichnet, dass** ein Zangenteil (26) Doppel-L oder Z-artig abgewinkelt ist, so dass ein mit dem Holzwerkstück (3) zusammenwirkender vorderer Bereich des Zangenteils (26) auf dem Holzwerkstück (3) ablegbar ist und ein hinterer Bereich, an dem das Zangenteil (26) am Kopplungselement (20) gelagert ist, seitlich neben dem Holzwerkstück (3) angeordnet ist, um ein Nachfassen des Holzwerkstücks (3) durch das zweite Transportsystem (2) zu ermöglichen und eine Kollision zu vermeiden.

## Claims

1. Machining installation for machining of timber workpieces, squared timbers, boards, stacks of boards and the like with a machining unit (4), a first conveying system (1) which is arranged in the inlet area (90) of the machining unit (4) and formed of at least a driven driving wheel (10), a driving roll or a driving roller and conveys a timber workpiece (3) that has been fed in to the machining unit (4), and a second conveying system (2) arranged in the outlet area (91) of the machining unit (4), wherein the first and/or the second conveying system (1, 2) convey(s) the timber workpiece (3) for or during further machining operations of the machining unit (4) and wherein at least one conveying system (1, 2) has a positioning system which cooperates with a measuring system allowing precisely measured positioning and movement of the timber workpiece (3) in the machining unit (4), i.e. combining of the machining and the conveying movement of the timber workpiece (3), wherein the second conveying system (2) is embodied as a coupling unit (20) in the form of a positioning carriage which can be made to travel on a guide track (21) and has two gripping parts (25, 26) which cooperate with one another and is arranged at the side adjacent to the timber workpiece (3) to grip and regrip the timber workpiece (3) along the entire length of the timber workpiece, **characterised in that** one gripping part (26) is angled like a double L or Z so that a front area of the gripping part (26) cooperating with the timber workpiece (3) can be applied on the timber workpiece (3) and a rear area in which the gripping part (26) is mounted on the coupling element (20) is arranged at the side adjacent to the timber workpiece (3) in order to allow the second conveying system (2) to regrip the timber workpiece (3) and avoid a collision.

## Revendications

1. Installation d'usinage servant à usiner des pièces en bois, des bois équarris, des planches, des piles de planches et similaires, avec un module d'usinage (4), un premier système de transport (1) disposé dans la zone d'entrée (90) du module d'usinage (4), lequel est formé par au moins une roue d'entraînement (10) entraînée, un tambour d'entraînement ou un cylindre d'entraînement et qui transporte une pièce en bois (3) chargée à proximité du module d'usinage (4), et un deuxième système de transport (2) disposé dans la zone de sortie (91) du module d'usinage (4), dans laquelle le premier et/ou le deuxième système de transport (1, 2) transporte la pièce en bois (3) pour ou au cours d'usinages ultérieurs du module d'usinage (4) et dans laquelle au moins un système de transport (1, 2) présente un système de positionnement coopérant avec un système de mesure, permettant ainsi un positionnement précis et un déplacement guidé de la pièce en pois (3) dans le module d'usinage (4), en d'autres termes une superposition de l'usinage et du déplacement de transport de la pièce en bois (3), dans laquelle le deuxième système de transport (2) est réalisé sous la forme d'une unité de couplage (20) se présentant sous la forme d'un chariot de positionnement, pouvant être déplacé sur une voie de guidage (21), avec deux parties formant une pince (25, 26) coopérant ensemble, lequel chariot de positionnement est disposé latéralement à côté de la pièce en bois (3) afin de saisir et de saisir ultérieurement la pièce en bois (3) le long de la totalité de la longueur de pièce en bois, **caractérisée en ce qu'**une partie formant une pince (26) est coudée de manière à présenter une forme de double L ou à la manière d'un Z de sorte qu'une zone avant, coopérant avec la pièce en bois (3), de la pièce formant une pince (26) puisse être déposée sur la pièce en bois (3), et une zone arrière, au niveau de laquelle la partie formant une pince (26) est montée au niveau de l'élément de couplage (20), est disposée latéralement à côté de la pièce en bois (3) afin de permettre un suivi de la pièce en bois (3) à travers le deuxième système de transport (2) et d'éviter une collision.
